# EUROPÄISCHE PATENTANMELDUNG

(11) **EP 1 394 529 A1**
(43) Veröffentlichungstag der Anmeldung: **03.03.2004**
(21) Anmeldenummer: 03013910.9
(22) Anmeldetag: 20.06.2003
(51) Int. Cl.: G01N 3/18, G01N 3/08

(54) **Verfahren und Vorrichtung zur Bestimmung von thermischen und mechanischen Belastungen auf Reifencorde im Bauprozess**

(30) Priorität: 29.08.2002 DE 10239645
(71) Anmelder: Continental Aktiengesellschaft, 30165 Hannover (DE)
(72) Erfinder: Wahl, Günter, Dr., 31249 Hohenhameln/Clauen (DE); Falke, Thomas, 30163 Hannover (DE)

(57) **Zusammenfassung**

**1. Bestimmung von thermischen und mechanischen Belastungen auf Reifencorde im Bauprozess**
2. Zur Durchführung des erfindungsgemäßen Verfahrens zur Messung von simulierten thermischen und mechanischen Belastungen an Reifencorden kommt außer mindestens einer Anordnung (2'), die jeweils eine Kraftmesseinrichtung (4) nebst Klemme (4a), jeweils eine Klemmbacke (6) zur Einspannung jeweils eines zwischen der Kraft-Messeinrichtung (4) und der Klemmbacke (6) einzuspannenden Gewebefadens (8) und mindestens eine Heizung (10) zur Aufheizung des mindestens einen Gewebefadens (8) innerhalb eines Temperaturbereichs von 25°C bis 180°C zusätzlich mindestens eine Dehnungseinrichtung zum Einsatz.
   Vorzugsweise ist an die Messanordnung (2') zur Bestimmung von Schrumpfkraftpotential F_{SP} und Deformationspotential F_{PD} mindestens eine in verschiedenen Winkelpositionen arretierbare Walze (12) angebracht, wobei die Achse der Walze (12) quer zur Richtung eines zwischen der Klemme (4a) der Kraft-Messeinrichtung (4) und der Klemmbacke (6) einzuspannenden Gewebefadens (8) ausgerichtet ist, und wobei ein über die Klemmbacke (6) hinausgehendes Ende des Gewebefadens (8) auf dem Umfang der Walze (12) an einer Einspannstelle (14) einspannbar ist.

## Beschreibung

### Anwendungsgebiet

Die Erfindung handelt von thermischen und mechanischen Belastungen, wie sie an Reifencorden insbesondere während des Reifenbauprozesses auftreten.
Zu diesem Zweck betrifft die Erfindung ein Messverfahren zur Bestimmung von simulierten Belastungen und eine Vorrichtung zur Durchführung des Verfahrens gemäß den Oberbegriffen der Ansprüche 1 und 7.

### Einleitung

Verschiedene Eigenschaften von PKW-Reifen hängen in beträchtlichem Ausmaß von der Deckgewebelage ab.
Derzeit bieten verschiedene Hersteller Deckgewebe aus Nylon 6.6 an.
Es hat sich herausgestellt, dass neu eingeführtes Deckgewebe die Eigenschaften von Testreifen beeinflussen können, selbst wenn die derzeit spezifizierten Parameter konstantgehalten werden.

Während des Reifen-Herstellungsprozesses wirken auf die Deckgewebelage verschiedene, durch Expansion und Hitze hervorgerufene Kräfte ein. Im Rahmen der Nachbehandlung tritt bei 180°C eine Schrumpfkraft auf. Die Schrumpfkraft wird als innere Kraft definiert, die in dem Cord im erhitzten Zustand bei konstanter Dehnung vorliegt.

Um die Einführung eines neuen Deckgewebe-Materials zu vereinfachen, sollen die Corde mittels standardisierbarer Testmethoden charakterisiert werden.

Bisher wurde die Schrumpfkraftpotential ermittelt. Die Schrumpfkraft der Deckgewebe-Corde beeinflusst die Eigenschaften des Reifens.

### Aufgabe der Erfindung

Die Aufgabe der Erfindung besteht zunächst darin, den bisherigen Test zur Bestimmung der Schrumpfkraft zu vereinfachen und schneller durchführbar zu machen.

Außer der Schrumpfkraft spielt ein weiterer Parameter eine Rolle bei der Entwicklung eines neuen Reifens. Unmittelbar nach der Entformung kann eine Deformation entstehen, die von einer Kontraktion des Nylon-Cords aufgrund einer inneren Kraft hervorgerufen wird. Diese innere Kraft wird Deformations-Potential F_{DP} genannt. Es wird angenommen, dass dieses Deformations-Potential F_{DP} unabhängig von der Schrumpfkraft F_{SP} ist.

Es wird vermutet, dass die nach der Entformung des Reifens auf die Corde wirkende innere Kraft die festgestellten Deformationen verursachen kann. Diese Kraft stellt das Deformationspotential dar, das mit Hilfe einer Weiterbildung der bisherigen Schrumpfkraft-Messvorrichtung bestimmt werden soll.
Die Deformation kann sofort nach der Entformung stattfinden und es wird vermutet, dass sie durch die inneren Kräfte des Nylon-Cords verursacht wird. Dabei wurde keine Verbindung zwischen der auf den Cord wirkenden inneren Kraft und der Deformation festgestellt.
Eine Deformation erfolgt vorzugsweise außerhalb des Schulterbereichs des Reifens, wo der Widerstand gegen Deformationen gering ist.

Es soll ein weiterführender Test entwickelt werden, mit dem letztendlich sowohl das Schrumpfkraftpotential F_{SP} als auch das Deformationspotential F_{PD} bestimmt werden kann.

### Lösung und Vorteile

Die mit Anspruch 1 aufgezeigte Lösung der Erfindung besteht in einer einfachen und schnellen Methode zur Bestimmung des Schrumpfkraftpotential F_{SP} von Deckgewebe-Corden.

Mit dem gemäß Anspruch 2 weiterentwickelten Test wird außer dem Schrumpfkraftpotential F_{SP} auch das Deformations-Potential F_{DP} erstmals quantitativ reproduzierbar bestimmt.

Dieser erfindungsgemäß weiterentwickelte Test mit dem sowohl das Schrumpfkraftpotential F_{SP} als auch das Deformationspotential F_{DP} bestimmt werden kann, besteht aus vier Schritten, die die verschiedenen Stufen der Reifenproduktion simulieren, und betrachtet beispielhaft vier Werte der Kontraktion X (X = 0%; 0,5%, 1%; 1,5%):
1.) Dehnung des Cords um 3,5 % der ursprünglichen Länge (Aufbau des Reifens);
2.) Erwärmung des gedehnten Cords von Umgebungstemperatur auf 180°C (Nachbehandlung);
3.) Schrumpfung des gedehnten Cords um X (Entformung);
4.) Abkühlung des Cords von 180 °C auf Umgebungstemperatur.

Mit Hilfe der erfindungsgemäß weiterentwickelten Methode kann zwischen Corden unterschieden werden, die zu einer Deformation der Reifen führen und solchen, die keinen Einfluss auf das Erscheinungsbild der Reifen nach der Nachbehandlung haben. D. h.: Mit Hilfe des weiterentwickelten Tests kann das für den Schrumpf-Prozess des Reifens nach der Entformung optimal geeignete Cord-Material zuverlässig und reproduzierbar herausgefunden werden.
Außerdem kann ein Einfluss auf die Reifeneigenschaften abgeleitet werden.

### Zeichnungen

Ein Ausführungsbeispiel der Erfindung wird anhand der Abbildungen erläutert. Es zeigt:
Fig. 1 den Prinzipaufbau einer erfindungsgemäßen Vorrichtung zur Durchführung des weiterentwickelten Tests;
Fig. 2 den Prinzipaufbau einer Standard-Vorrichtung gemäß dem Stand der Technik;
Fig. 3 ein Kraft/Zeit-Diagramm zur Bestimmung des Schrumpfkraftpotentials F_{SP}; und
Fig. 4a und Fig. 4b jeweils ein Kraft/Zeit-Diagramm zur Bestimmung von Schrumpfkraftpotential F_{SP} und Deformationspotential F_{PD}.

### Beschreibung

### Aufbau

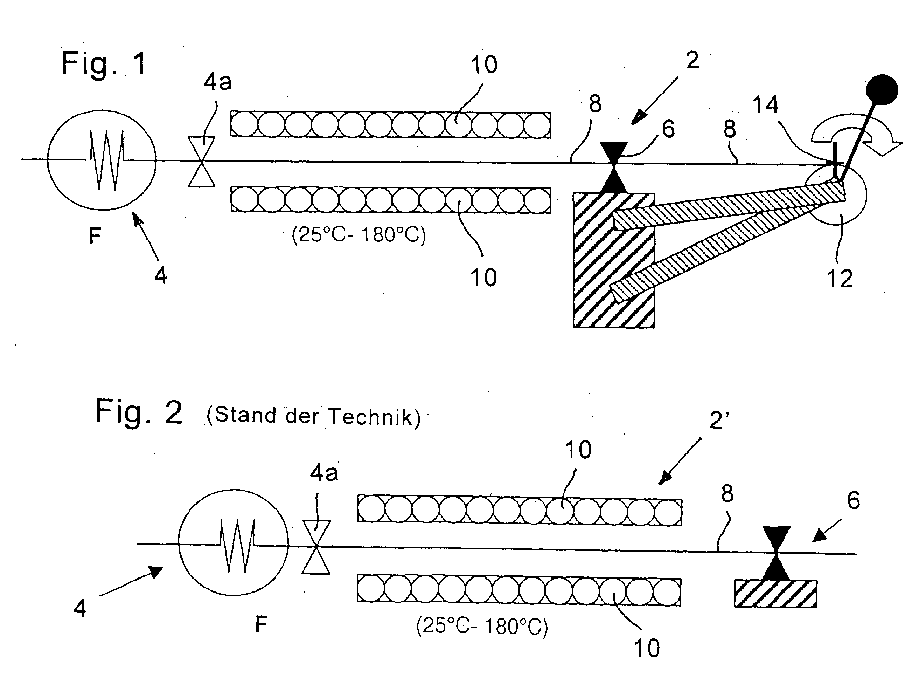

In der in Fig. 2 als Prinzipskizze dargestellten Messanordnung 2' symbolisiert 4 eine Kraft-Messeinrichtung (Kraftmessdose) mit einer Klemme 4a. 6 bezeichnet eine Klemmbacke für einen zwischen der Klemme 4a der Kraft-Messeinrichtung 4 und Klemmbacke 6 einzuspannenden Cord (Gewebefaden) 8. Der Cord 8 kann mit Hilfe einer Heizung 10 auf eine Temperatur zwischen 25°C und 180°C aufgeheizt werden.

Die Fig. 1 zeigt eine erfindungsgemäß weiterentwickelte Messanordnung 2. Sie enthält eine Konstruktion, um die die herkömmliche Messapparatur 2' ergänzt worden ist. Die Ergänzung besteht im wesentlichen aus einer Walze 12, deren Achse quer zur Richtung des eingespannten Gewebefadens 8 ausgerichtet ist. Der Gewebefaden 8 kann auf dem Umfang der Walze 12 fest eingespannt werden (Einspannstelle 14). Die Walze 12 selbst ist drehbar und in verschiedenen Winkelpositionen arretierbar.
Der Versuchsaufbau der Messanordnung 2 weist folgende Abmessungen auf: Freie Fadenlänge 500 mm, Durchmesser der Walze 20 mm. Bei einem zwischen Kraft-Messeinrichtung 4 und Einspannstelle 14 der Walze 12 stramm eingespannten Gewebefaden 8 ergibt sich bei einer Verdrehung der Walze 12 um 101° eine Faden-Dehnung von 3,5%.

Da jeweils nur eine einzige Probe untersucht werden kann (Test-Zeit: 30 Min.) wurde erfindungsgemäß eine Anordnung (nicht dargestellt) entwickelt, die gleichzeitig die Untersuchung von bis zu 10 Corden erlaubt, wodurch sich die Testzeit pro Probe auf umgerechnet 3 Minuten reduziert. Dabei werden die einzelnen Corde mit Hilfe einer Klemmleiste (nicht dargestellt) gehalten.

### Wirkungsweise

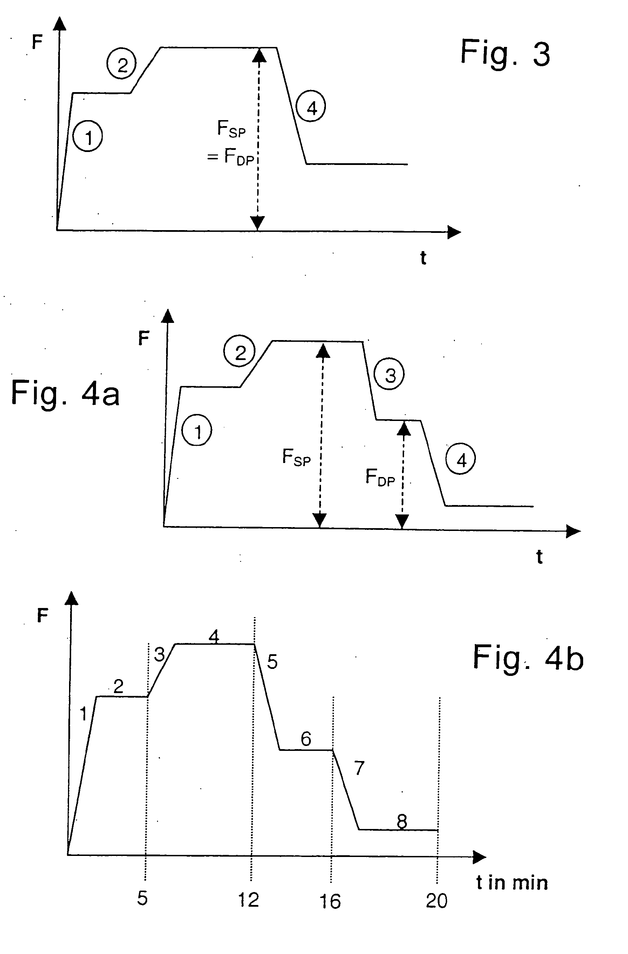

Mit den erfindungsgemäßen Vorrichtungen kann der weiterentwickelte Test durchgeführt werden.
Die Verfahrensablauf des Tests ohne Kontraktions-Schritt ist in Fig. 3 und die Verfahrensschritte des weiterentwickelten Tests sind in Fig. 4a/b dargestellt.

Der bisherige Schrumpf-Test umfasst die folgenden Verfahrensschritte bzw. Messungen:
1.) Bestimmung des Schrumpfmaßes bei 180°C in Prozent;
2.) Bestimmung der Schrumpfkraft bei 180°C in Newton;
3.) Bestimmung der Restkrümpfung in Prozent (nach zwei Minuten bei 180°C und Abkühlung auf Umgebungstemperatur).

Um die Kontraktion unmittelbar im Anschluss an die Nachbehandlung in der Simulation zu berücksichtigen, wird ein Kontraktionsvorgang auf das bereits durchgeführte Testprogramm ergänzt.
Da eine maximal mögliche Länge des Cords 8 aufgeheizt werden soll, wird die der Heizung 10 nächstliegende Klemmbacke 6 sofort nach der Dehnung des Cords 8 geschlossen (siehe Fig. 1). Der Kontraktions-Schritt erfolgt durch Re-Justage der Klemmbacke 6 auf die gewünschte Dehnung (3,5% - X) und kurzzeitiges Öffnen der Klemmbacke 6.

Das erfindungsgemäße weiterentwickelte Test-Programm umfasst die folgenden Verfahrensschritte::
1.) Dehnung um 3,5 % (Aufbau des Reifens);
2.) 5 Min. bei Umgebungstemperatur;
3.) Aufheizen auf 180 °C;
4.) 7 Min. bei 180 °C (Nachbehandlung);
5.) Kontraktion um X % der ursprünglichen Länge (Entformung);
6.) 4 Min. bei 180 °C;
7.) Entfernen der Heizung;
8.) 4 Min. Abkühlung auf Umgebungstemperatur.

Die Längskraft auf einen einzelnen Cord 8 von 500 mm Länge wird während der Prozedur ständig gemessen und die Werte alle 5 sec aufgezeichnet. Dabei wurde jedes Muster um 1,5%; 1,0%; 0,5% und 0,0% gedehnt.

Die Fig. 4a/b zeigt ein F/t-Diagramm, in dem die genannten Verfahrensschritte dargestellt sind.

### Bezugszeichenliste

- 2: Messanordnung
- 2': Messanordnung (Stand der Technik)
- 4: Kraft-Messeinrichtung
- 4a: Klemme
- 6: Klemmbacke (Klemmleiste)
- 8: Cord (Gewebefaden)
- 10: Heizung
- 12: Walze
- 14: Einspannstelle

## Patentansprüche

1. Verfahren zur Bestimmung der Auswirkungen von mechanischen und thermischen Belastungen, wie sie an Reifencorden insbesondere während des Reifenbaus auftreten, durch Simulation,
wobei die auf einen gedehnten und aufgeheizten Cord (Gewebefaden, 8) wirkende Kraft (=Schrumpfkraftpotential F_{SP}) gemessen wird,
**dadurch gekennzeichnet,**
**dass** die Messung des Schrumpfkraftpotentials F_{SP} gleichzeitig an mehreren Corden (8) von jeweils vorgegebener Länge, die um einen vorgegebenen Wert gedehnt und auf eine vorgegebene Temperatur aufgeheizt worden sind, erfolgt.

2. Verfahren nach Anspruch 1,
zur Bestimmung des Schrumpfkraftpotentials F_{SP} und einer Deformationspotentials F_{PD} eines zu untersuchenden Cords (8),
**gekennzeichnet durch**
folgende Verfahrensschritte:
1.) Dehnen des Cords (8) um einen vorgegebenen Prozentsatz der ursprünglichen Länge;
2.) Erwärmen des gedehnten Cords (8) von Umgebungstemperatur auf eine vorgegebene Aufheiztemperatur;
3.) Abkühlen des Cords (8) auf Umgebungstemperatur und Messen der den einzelnen Schritten zugeordneten Kräfte.

3. Verfahren nach Anspruch 1 oder 2,
**gekennzeichnet durch**
einen ergänzenden Kontraktionsvorgang auf das gemäß Anspruch 1 oder 2 durchgeführte Programm:
1.) Dehnen des Cords (8) um einen vorgegebenen Prozentsatz der ursprünglichen Länge;
2.) Erwärmen des gedehnten Cords (8) von Umgebungstemperatur auf eine vorgegebene Aufheiztemperatur;
3.) Schrumpfen des gedehnten Cords (8) um einen vorgegebenen Prozentsatz;
4.) Abkühlen des Cords (8) auf Umgebungstemperatur und Messen der den einzelnen Schritten zugeordneten Kräfte,
wobei die der aufgeheizten Phase (2.) zugeordnete Kraft das Schrumpfkraftpotential F_{SP}, und wobei die der geschrumpften Phase (3.) zugeordnete Kraft das Deformationspotential F_{PD} darstellt.

4. Verfahren nach Anspruch 3,
**dadurch gekennzeichnet,**
**dass** die Klemmbacke (6) sofort nach der Dehnung geschlossen wird,
wobei der Kontraktionsschritt durch Re-Justage der Klemmbacke (6) auf die gewünschte Dehnung und kurzzeitiges Öffnen der Klemmbacke (6) erfolgt.

5. Verfahren nach einem der Ansprüche 1 bis 4,
**gekennzeichnet durch**
Anwendung folgender Verfahrensschritte auf den mindestens einen Cord (8):
1.) Dehnen um 3,5%;
2.) 5 Min. verharren bei Umgebungstemperatur;
3.) Aufheizen auf 180°C;
4.) 7 Min. verharren bei 180°C;
5.) Kontrahieren um X % der ursprünglichen Länge;
6.) 4 Min. verharren bei 180°C;
7.) Entfernen der Heizung;
8.) Abkühlen und 4 Min. verharren bei Umgebungstemperatur,
wobei die Längskraft auf einen einzelnen Cord während der gesamten Prozedur ständig gemessen und in fest-vorgegebenen Zeitintervallen aufgezeichnet wird.

6. Vorrichtung zur Durchführung des Verfahrens nach einem der Ansprüche 1 bis 5, mit mindestens einer Messanordnung (2', ...),
die jeweils eine Kraft-Messeinrichtung (4) nebst Klemme (4a),
jeweils eine Klemmbacke (6) zur Einspannung jeweils eines zwischen der Kraft-Messeinrichtung (4) und der Klemmbacke (6) einzuspannenden Gewebefadens (8) und mindestens
eine Heizung (10, ...) zur Aufheizung des mindestens einen Gewebefadens (8) innerhalb eines Temperaturbereichs von 25° bis 180°C aufweist,
**dadurch gekennzeichnet,**
**dass** die Vorrichtung zusätzlich mindestens eine Dehnungseinrichtung umfasst,
- zur gleichzeitigen Einspannung, Dehnung, Aufheizung und Messung mindestens eines Gewebefadens (8, ...).

7. Vorrichtung nach Anspruch 6,
**gekennzeichnet durch**
eine Messanordnung (2),
die aus einer Messanordnung (2') besteht,
an die mindestens eine in verschiedenen Winkelpositionen arretierbare Walze (12) angebracht ist,
wobei die Achse der Walze (12) quer zur Richtung eines zwischen der Klemme (4a) der Kraft-Messeinrichtung (4) und der Klemmbacke (6) einzuspannenden Gewebefadens (8) ausgerichtet ist, und
wobei ein über die Klemmbacke (6) hinausgehendes Ende des Gewebefadens (8) auf dem Umfang der Walze (12) an einer Einspannstelle (14) einspannbar ist.
